# EUROPÄISCHE PATENTSCHRIFT

(11) **EP 1 696 680 B1**
(45) Veröffentlichungstag und Bekanntmachung des Hinweises auf die Patenterteilung: **23.04.2008**
(21) Anmeldenummer: 06002121.9
(22) Anmeldetag: 02.02.2006
(51) Int. Cl.: H04Q 1/14

(54) **Anordnung zur Überwachung einer Vielzahl von Verbindungen**
Arrangement to monitor the connection state of several connections
Arrangement pour surveiller l'état de connexion de plusieurs connexions

(30) Priorität: 02.02.2005 DE 102005004905
(43) Veröffentlichungstag der Anmeldung: 30.08.2006
(73) Patentinhaber: Horn, Thomas, 38895 Langenstein (DE)
(72) Erfinder: Horn, Thomas, 38895 Langenstein (DE)
(74) Vertreter: Einsel, Martin

(56) Entgegenhaltungen:
- EP-A- 0 575 100
- DE-A1- 10 249 414
- DE-B3- 10 244 304
- US-B1- 6 424 710

## Beschreibung

Die Erfindung betrifft eine Anordnung zur Überwachung einer Vielzahl von Verbindungen, bei der Verbindungselemente vorgesehen sind, die zur Herstellung der Verbindungen paarweise miteinander verbindbar sind, bei der Transponder vorgesehen sind, die einigen der Verbindungselemente zugeordnet sind und bei der Leseelemente vorgesehen sind, die einigen der Verbindungselemente zugeordnet sind.

In vielen Fällen ist es erforderlich, Verbindungen zu überprüfen und zu überwachen. Verbindungen können falsch gesteckt sein, sie können möglicherweise überhaupt nicht eingesteckt sein, es kann sich auch um eine Auswahl von mehreren richtig steckbaren Verbindungen handeln oder Verbindungen können sich auch ungewollt lösen.

Verbindungen, insbesondere auch Steckverbindungen, müssen in vielen Fällen auch geändert werden, wenn sich die äußeren Umstände ändern. So dienen beispielsweise Datennetzwerke dazu, eine größere Zahl an Arbeitsplätzen beziehungsweise die dort arbeitenden Mitarbeiter mit Datenanschlüssen zu versehen. Die Nutzer an den Arbeitsplätzen werden so mit einzelnen Medien oder Diensten versorgt, beispielsweise mit Datendiensten oder auch Telekommunikationsdiensten. Um dies vorzunehmen, weisen die Datennetzwerke zentrale Verteilerpunkte, meistens Verteilerschränke auf. In den Verteilerschränken sind Patchfelder vorgesehen. Diese Patchfelder besitzen Ports, also Anschlüsse. Von den Ports dieser Patchfelder führen Datenkabel sternförmig zu den Datenanschlüssen an den Arbeitsplätzen.

Die Verbindungen zu und zwischen den Patchfeldern (häufig auch Patchpanels genannt) werden mit Patchkabeln realisiert. Diese Patchkabel besitzen an jedem Ende einen Stecker. Dieser Stecker ist in einen Port oder Anschluss an einem der Patchfelder einsteckbar.

Auch in anderen Räumen, beispielsweise in Büroräumen, stehen diverse Computer und andere Geräte, zwischen denen Datenverbindungen gesteckt werden müssen. Das gleiche gilt auch für Telekommunikationsanlagen oder auch für mechanische Verbindungen und Kupplungen, bei denen etwa innerhalb einer Maschine oder innerhalb einer Werkhalle eine Reihe von Anschlüssen miteinander gekoppelt werden müssen, bei denen aber anwendungsbezogen auch Änderungen vorkommen können.

Weitere Anwendungsfälle sind beispielsweise chemische Anlagen oder auch medizinische und medizintechnische Bereiche, bei denen wechselnde Komponenten zusammengesteckt, zusammengeschraubt oder in anderer Form miteinander verbunden werden müssen. Diese wechselnden Komponenten können Schlauchverbindungen, elektrische Kabelverbindungen, mechanische Verbindungen oder auch andere Arten von Verbindungen sein.

Bei der Vielzahl gesteckter Verbindungen kann es durchaus im Einzelfall geschehen, dass falsche Verbindungen gesteckt werden oder auch bestimmte Verbindungen aufgrund Irrtums oder mechanischer Unzulänglichkeiten vergessen werden. Dies kann je nach Fall durchaus gefährlich werden oder jedenfalls zu Fehlfunktionen führen.

Es ist also sinnvoll, eine Überprüfungsmöglichkeit zu haben, ob und wie die Verbindungen denn tatsächlich gesteckt worden sind. Gerade bei einer Vielzahl von Steckverbindungen verbietet sich ein manuelles Nachprüfen.

In einer Reihe von Vorschlägen wird schon der Gedanke geäußert, die Komponenten von möglichen Steckverbindungen mit zusätzlichen Elementen auszurüsten. So werden beispielsweise in der EP 0 575 100 B1, der US-PS 6,784,802 und der DE 102 44 304 B3 Anordnungen zur Überwachung von Patchfeldern an Verteilerpunkten in Datennetzwerken vorgeschlagen. Dabei werden etwa in der DE 102 44 304 B3 gemäß dem Oberbegriff des Anspruchs 1 Patchkabel an den Steckern an beiden Enden mit Transpondem ausgerüstet, während die Patchfelder mit Readerspulen versehen werden. Die Readerspulen stehen mit einer Auswertungseinheit in Datenverbindung. Dadurch kann von der Auswertungseinheit festgestellt werden, welche Patchkabel mit ihren Steckern in welche Patchfelder eingesteckt worden sind. Diese Information kann mit einer entsprechenden vorgegebenen Verbindungsliste der Soll-Verbindungen verglichen und dadurch Fehlsteckungen aufgefunden werden, und zwar auch schon vor Inbetriebnahme der Anlage.

Die DE 102 61 016 A1 schlägt in etwas einfacherer Form eine Überprüfung einer Kraftfahrzeugelektrik vor, in der DE 298 15 964 U1 geht es um Steckvorrichtungen zwischen Lastkraftwagen und entsprechenden Anhängern, bei denen überprüft werden soll, welches Zugfahrzeug an welches Anhängerfahrzeug gekoppelt worden ist.

Die bekannten Anordnungen sind zur Lösung der entsprechenden Situationen auch geeignet. Wünschenswert wäre es jedoch, eine noch universellere, mehr Möglichkeiten bietende Anordnung zur Überwachung von Verbindungen, insbesondere von Steckverbindungen zu haben.

Aufgabe der Erfindung ist es daher, eine Anordnung zur Überwachung von Verbindungen mit noch weiteren Möglichkeiten vorzuschlagen.

Diese Aufgabe wird bei einer gattungsgemäßen Anordnung erfindungsgemäß dadurch gelöst, dass jedem Verbindungselement einer jeden paarweisen Verbindung ein Transponder zugeordnet ist, dass die Leseelemente jeweils zumindest einigen der Transponder der Verbindungselemente zugeordnet sind, dass jedes Leseelement so ausgebildet und angeordnet ist, dass es den Transponder des jeweils anderen Verbindungselements einer paarweisen Verbindung auslesen kann, und dass eine übergeordnete Leseeinrichtung vorgesehen ist, die eine Vielzahl der Transponder mit den zugeordneten Leseelementen nach derem jeweils gegenseitigen Auslesevorgang auslesen kann.

Auf diese Weise wird es möglich, noch sehr viel variabler und unter weniger Vor bedingungen eine Überwachung von Verbindungen vorzunehmen. Praktisch ohne Beschränkung kann jetzt zu jeder beliebigen Zeit innerhalb eines bestimmten überwachten Raumes genau festgestellt werden, welche Verbindungen bestehen, beispielsweise welche Steckverbindungen gesteckt sind, und ob dies einer bestimmten Vorgabe entspricht.

Praktisch sieht das so aus, dass eine räumlich abgesetzte und entfernte Leseeinrichtung drahtlos mittels Funkwellen eine Vielzahl von Transpondern erfasst. Die Leseeinrichtung versorgt mittels eines Hochfrequenzfeldes also drahtlos alle Transponder mit Energie. Es werden zwei Arten von Transpondern unterschieden. Ein sogenannter passiver Transponder sendet ununterbrochen seine Kennung, sofern er sich in Reichweite einer Leseeinrichtung befindet. Diese Kennung des passiven Transponders wird nun von einem aktiven Transponder aufgenommen, wenn sich der passive Transponder und der aktive Transponder in einem definierten Abstand zueinander befinden. Ein aktiver Transponder ist in der Lage, diese Informationen zu bearbeiten und jetzt an die Leseeinrichtung weiter zu übermitteln. Dadurch erkennt die Leseeinrichtung die Anordnung der Transponder zueinander. Sendet ein aktiver Transponder nur seine Daten, hat er somit keinen passiven Transponder erkannt, ist offensichtlich die zu überwachende Verbindung getrennt. Im umgekehrten Fall ist die zu überwachende Verbindung geschlossen. Denkbar ist eine Paarbildung der Transponder, aber auch eine Gruppenbildung ist realisierbar. Die gesamte Kommunikation zwischen den Transpondern und zur Leseeinrichtung erfolgt drahtlos mittels Funkwellen.

Die Kommunikation erfolgt jetzt also nicht nur einseitig von einem Transponder zu einem Reader, sondern es erfolgt eine Kommunikation von Transpondern untereinander. Hierzu ist den Transpondern jeweils ein Leseelement zugeordnet, vorzugsweise als integraler Bestandteil. Dieses Leseelement ist also nicht wie bekannt ein Reader als gegenüberliegender Part. Ein Transponder erfasst mittels seines eigenen Leseelementes Informationen eines anderen Transponders und teilt diese dann zusammen mit seinen eigenen Daten seiner übergeordneten Leseeinrichtung mit.

Es erfolgt jetzt also eine Kommunikation von Transpondern paarweise oder eventuell gruppenweise miteinander zur gegenseitigen Identifikation. Diese ldentifikationsdaten werden dann an eine übergeordnete Leseeinrichtung weitergegeben. und zwar ebenso wie die Kommunikation zwischen den beiden Transpondem drahtlos.

Die Identifikationsdaten werden dabei von der übergeordneten Leseeinrichtung entweder aus einem der beiden Transponder eines Transponderpaares oder aber auch aus beiden Transpondern des Transponderpaares ausgelesen und weiter genutzt. Dies geschieht bei allen Transponderpaaren der gesamten Anordnung. Einzelne Transponder, also nicht zu Transponderpaaren gehörende Transponder, gehören dann offensichtlich zu Verbindungselementen, die nicht Teil von Verbindungen sind. Das können ungenutzte Anschlüsse oder lose Stecker sein. Diese Transponder geben dann die Information an die übergeordnete Leseeinrichtung weiter, dass ihnen kein anderer Transponder gegenübersteht. Diese Daten können dann in entsprechenden Systemen, wie beispielsweise in Datenbanken, zur Positionsbestimmung der Transponder oder auch zur Überwachung der Verbindungen selbst genutzt werden.

Die Energieversorgung aller Transponder erfolgt dabei durch das magnetische Wechselfeld, das durch die Leseeinrichtung erzeugt wird.

Die Kommunikation der Transponder untereinander kann dabei durch die Nutzung unterschiedlicher Frequenzen oder aber auch unter Verwendung eines Zeitmultiplexverfahrens erfolgen. Benutzt man unterschiedliche Frequenzen für die Kommunikation, so ist eine Frequenz für die Datenübertragung zwischen den Transpondern zu nutzen und eine weitere (andere) für die Kommunikation von den Transpondern zur Lesespule. Auf diese Weise können weitestgehend Störungen vermieden werden.

Beim Zeitmultiplexverfahren werden die Transponder synchronisiert, beispielsweise über die Leseeinrichtung, und besitzen damit eine definierte Zeiteinheit, in welcher der jeweilige Transponder kommunizieren darf.

Die erfindungsgemäß verwendeten sich gegenüberliegenden Transponder können drahtlos entweder mittels Funkwellen die Daten austauschen oder auch nur die Informationen von einem Transponder zu einem anderen Transponder übermitteln.

Zweckmäßig wird man alle Transponder in die Lage versetzen, dass diese Daten von einer Auswerteeinheit gelesen werden können, wiederum mittels Funkwellen. Denkbar wäre es auch, diese Fähigkeit nur bestimmten Transpondem zu geben, vielseitiger wird die Anordnung aber bei einer Verwendung gleichrangiger Transponder.

Der Auswerteeinheit beziehungsweise Leseeinrichtung stehen Informationen über benachbarte Transponder auf diese Weise zur Verfügung, denn jeder Transponder gibt ja zusammen mit seiner eigenen Kennung Informationen über den ihm gegenüberstehenden Transponder mit, so dass bei einer Verbindung, beispielsweise einer Steckverbindung klar ist, welche Komponenten verbunden sind.

Das Einstecken, das Bestehen und auch das Lösen einer Verbindung kann dadurch praktisch sofort signalisiert werden.

Die hier beschriebenen Transponder sind in der Lage, miteinander zu kommunizieren. Dies erfolgt drahtlos per Funk (wie die in der Technik bekannte Kommunikation eines Transponders mit einer Readereinheit). Es ist somit also möglich, dass ein Transponder Informationen eines anderen Transponders erfassen kann und diese dann (zusammen mit seinen eigenen Daten) einer übergeordneten Leseeinrichtung (Reader) mitteilt.

Der Leseabstand oder Erfassungsabstand eines Transponders zum nächsten kann technisch klein (direkter Kontakt; Berührung) gewählt werden; womit es möglich wird, eine Trennung des Transponderpaares technisch zu erkennen oder zu erfassen. Der Erfassungsabstand zweier Transponder voneinander liegt erfindungsgemäß in einer Größenordnung von wenigen Millimetern. Entfernt oder nähert sich ein Transponder dem Lesebereich eines anderen Transponders, wird dies der Leseeinrichtung beziehungsweise der Readereinheit mitgeteilt und somit ist eine Auswertung (beispielsweise die Auslösung eines Alarms) möglich.

Im Folgenden wird anhand der Zeichnung ein Ausführungsbeispiel der Erfindung näher erläutert.

Es zeigt:

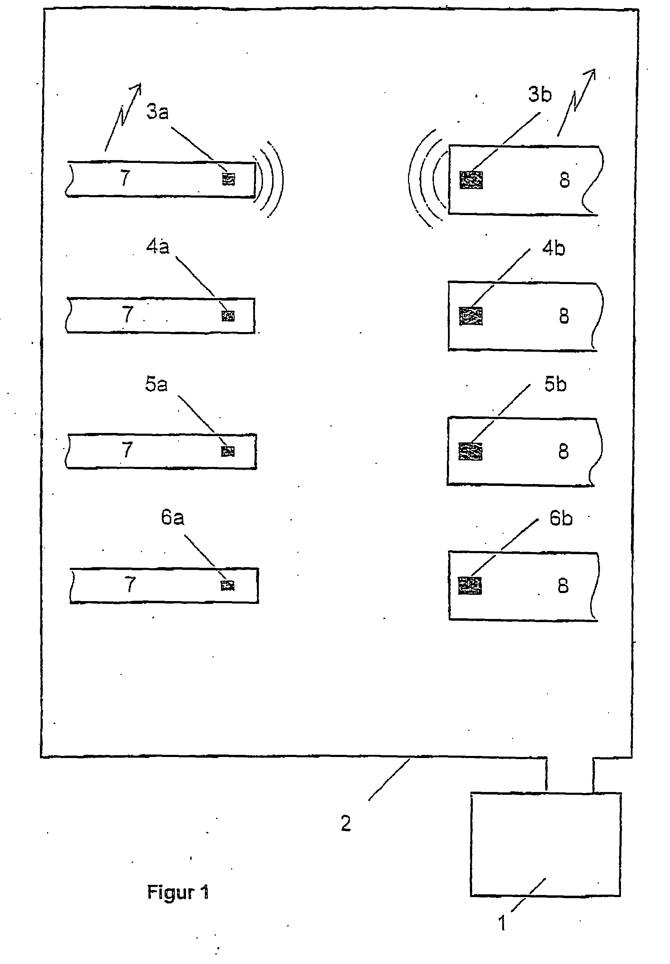

- **Figur 1**: eine schematische Darstellung einer erfindungsgemäßen Anordnung.

Die erfindungsgemäße, in **Figur 1** dargestellte Anordnung besitzt insbesondere eine übergeordnete Leseeinrichtung, einen so genannten Reader, der eine Reader-Elektronik 1 und eine Antenne 2 aufweist. Diese Leseeinrichtung erzeugt ein Hochfrequenzfeld in dem ihm zugeordneten Raum. Es kann sich beispielsweise um ein Bürogebäude, eine Fabrikhalle oder auch nur einen konkreten Raum in einem solchen Gebäude handeln. Der Raum kann auch ein Motorraum, eine Maschine, eine Anlage oder ein anderer Bereich in oder um ein technisches System sein.

In diesem von dem Hochfrequenzfeld der Leseeinrichtung versorgten Raum ist eine Vielzahl an Transpondern 3a, 3b, 4a, 4b, 5a, 5b, 6a, 6b angeordnet. Alle diese Transponder werden über das Hochfrequenzfeld der Leseeinrichtung mit der Reader-Elektronik 1 und der Antenne 2 mit Energie versorgt, die also als Stromversorgung der Transponder 3a bis 6b dient.

Die Transponder 3a, 4a, 5a, 6a sind jeweils an oder in einer Auswahl an Verbindungselementen angeordnet. Dies können Kabel, Streben, Schläuche etc. beziehungsweise insbesondere ein zur Verbindung mit einem anderen Gegenstand vorgesehenes Ende eines solchen häufig seilähnlich aufgebauten Gegenstandes sein. Am besten vorstellbar und in der Figur 1 angedeutet ist eine Ausführungsform, bei der die Transponder an Steckern 7 angebracht sind. Die Transponder 3b, 4b, 5b, 6b sind jeweils benachbart zu Anschlüssen 8 angeordnet. Die Stecker 7 sind in unterschiedliche Anschlüsse 8 steckbar. In der Praxis handelt es sich nicht nur um vier, sondern um hunderte oder tausende von Steckern 7 oder anderen Verbindungselementen und Anschlüssen 8 (sogenannte Ports beispielsweise), die miteinander verbunden werden können. Dabei sind Fehlsteckungen möglich und schwer zu erkennen.

Die Leseeinrichtung ist über ihre Reader-Elektronik 1 und die Antenne 2 in der Lage, gezielt Transponder zu adressieren, diese also anzusprechen. Das ist in der Figur 1 bei den Transpondern 3a und 3b entsprechend durch Funkwellen angedeutet. Durch dieses Ansprechen oder Adressieren können Informationen aus den Transpondern ausgelesen werden.

Ebenso ist es auch möglich, Informationen an die Transponder zu übermitteln oder diesen Weisungen zu erteilen.

Dabei können diejenigen Transponder, die an der aktuellen Kommunikation gerade nicht teilnehmen sollen, von der Leseeinrichtung mit der Reader-Elektronik 1 und der Antenne 2 auf Stumm geschaltet werden. In der Figur 1 ist dies gezielt bei den Transpondern 4a, 4b, 5a, 5b, 6a, 6b der Fall, was durch die fehlenden eingezeichneten Funkwellen anschaulich dargestellt wird.

Wie in der Figur 1 ebenfalls klar wird, stehen sich die Transponder jeweils paarweise gegenüber, beispielsweise steht der Transponder 3a gegenüber dem Transponder 3b und der Transponder 4a gegenüber dem Transponder 4b. Jedes Transponderteil ist dabei entsprechenden Steckelementen zugeordnet. So kann beispielsweise der Transponder 3a einem Stecker und der Transponder 3b einem entsprechenden Anschluss zugeordnet beziehungsweise in dessen unmittelbarer Nachbarschaft angeordnet sein. Möglich ist es auch, dass beispielsweise der Transponder 4a einem Kupplungselement eines medizinischen Gerätes zugeordnet ist und der Transponder 4b einem entsprechenden Gegenelement

Jedem Transponder ist nun zusätzlich ein (nicht extra dargestelltes) Leseelement zugeordnet, dass zum Auslesen anderer Transponder geeignet ist.

Dies bedeutet, dass der Transponder 3a mit einem nicht dargestellten, hinzugeordneten und beispielsweise in seiner unmittelbaren Nähe fest angebrachten Leseelement ausgerüstet ist und in der Lage ist, über dieses Leseelement den ihm gegenüberstehenden Partner auszulesen, also in der in Figur 1 dargestellten Konstellation den Transponder 3b.

Nach dem er diesen ausgelesen hat, wird durch die übergeordnete Leseeinrichtung mit der Antenne 2 und der Reader-Elektronik 1 eben der Transponder 3a mit samt dieser Information ausgelesen.

Auf diese Weise erfährt nun die Reader-Elektronik 1 durch das Auslesen des Transponders 3a, ob und gegebenenfalls welcher Transponder ihm gegenüber gestanden hat.

Daraus kann die Reader-Elektronik 1 nun Rückschlüsse darauf ziehen, ob wie beispielsweise gewünscht der Transponder 3b dem Transponder 3a gegenüber gestanden hat. War dies der Fall, so kann daraus geschlossen werden, dass die Steckverbindung ordnungsgemäß zu Stande gekommen ist, der die beiden Transponder 3a und 3b zugeordnet waren.

Hat der Transponder 3a jedoch einen ganz anderen Transponder ausgelesen, beispielsweise den Transponder 6b, so kann die Reader-Elektronik 1 daraus folgern, dass offenbar der Transponder 6b dem Transponder 3a gegenüber gestanden hat und eine unter Umständen unrichtige Steckverbindung zu Stande gekommen ist. Ob eine Steckverbindung korrekt und gewünscht oder aber nicht gewünscht war, kann die Reader-Elektronik 1 einer Datenbank oder anderen Informationen entnehmen. Die Reader-Elektronik 1 kann die ermittelten Daten und Ergebnisse auch an weitere Elemente weiterleiten.

Unter Umständen stellt die Reader-Elektronik 1 auch fest, dass beim Auslesen des Transponders 3a sich ergibt, dass überhaupt kein Transponder diesem gegenüber gestanden hat. Daraus kann sie dann entnehmen, dass an dieser Stelle keine Steckverbindung vorhanden ist. Auch hierzu kann sie nun feststellen, ob möglicherweise absichtlich keine Steckverbindung vorgesehen ist oder ob eine an sich beabsichtigte Steckverbindung entgegen den Vorgaben offensichtlich nicht getätigt oder jedenfalls nicht ordnungsgemäß getätigt wurde oder möglicherweise defekt ist.

Umgekehrt kann auch der Transponder 3b in der Lage sein, mit dem ihm zugeordneten nicht dargestellten Leseelement den ihm gegenüberstehenden Transponder auszulesen. Bei ordnungsgemäßer Steckverbindung könnte dies beispielsweise der Transponder 3a sein.

Auf diese Weise lässt sich noch eine Übereinstimmung hinsichtlich der festgestellten Steckverbindungen erreichen, da jede Steckverbindung durch zwei voneinander unabhängige Transponder mit zugeordneten Leseelementen überprüft und festgestellt wird, da die Transponder jeweils den ihnen gegenüberliegenden Transponder auslesen.

Dies kann entweder dazu genutzt werden, eine besondere Sicherheit zu erzielen, da alle Angaben doppelt übermittelt werden. Alternativ kann auch bei bestimmten Transpondern ein zugeordnetes Leseelement weggelassen werden, wenn auf Grund der konkreten Sachlage klar ist, welche Transponder einander theoretisch gegenüber stehen können. In Fällen, in denen jedoch etwa bei Kupplungen oder Steckern verschiedenste Kombinationsmöglichkeiten denkbar sind, etwa auch ein Zusammentreffen der Transponder 3a und 5a, wird man von der Vereinfachungsmöglichkeit keinen Gebrauch machen und statt dessen die zusätzliche Sicherheit nutzen.

Dann sind alle Transponderpaare, beispielsweise auch die Transponder 5a und 5b in der Lage, ihren jeweils gegenüberstehenden Partner auszulesen. Jeder der beiden Partner ist dann in der Lage, mit seinem Leseelement Informationen des ihm gerade gegenüberstehenden Partner-Transponders zu lesen, gegebenenfalls abzuspeichern und der Leseeinrichtung mit der Reader-Elektronik und der Antenne 2 zu übermitteln beziehungsweise von dieser ausgelesen zu werden.

Man kann es auch so ausdrücken, dass die Transponder 3a, 4a, 5a, 6a sogenannte passive Transponder in Sinne der oben erwähnten Erläuterung sind, die Transponder 3b, 4b, 5b, 6b dagegen aktive Transponder. Bei der Alternative mit der erhöhten Sicherheit wird man in beiden Fällen dann Serien von aktiven Transpondern verwenden.

Ein möglicher Bereich für eine Anwendung der Erfindung besteht etwa in der Flugzeugtechnik, sowohl bei zivilen wie auch bei militärischen Flugzeugen, die ebenfalls als Raum in Sinne der oben genannten Definition betrachtet werden können. Es kann sich auch um Kampfbomber oder Hubschrauber handeln.

Mit nur wenigen Leseeinrichtungen innerhalb eines solchen Flugzeuges lässt sich der Zustand aller lösbaren und unlösbaren Verbindungen ermitteln. Praktisch auf Knopfdruck oder auch automatisch werden alle sensiblen Informationen gesammelt, beispielsweise Informationen auf Fragestellungen wie "sind alle Kupplungen geschlossen und richtig positioniert?" oder auch "sind alle Geräte in das System eingefügt und richtig gesteckt und angeschlossen?" oder auch "sind alle Teile innerhalb einer Turbine richtig gesteckt und positioniert?". Dies gilt auch für gekapselte Systeme. Praktisch und einfach ausgedrückt kann erfindungsgemäß die Frage "ist alles an seinem richtigen Platz?" auch bei sehr kompliziert gestalteten Anlagen (wie dies Flugzeuge üblicherweise sind) beantwortet werden. Diese Beantwortung durch Auswertung erfolgt dann drahtlos über die aktiven und passiven Transponder zur Leseeinrichtung.

Auch eine Überwachung von Verbindungen ist natürlich möglich, die eigentlich unlösbar sein sollen, bei denen eine Lösung jedoch in Betracht kommt und unbedingt beobachtet werden muss. Beispiele hierfür sind etwa Schweißnähte, Pressverbindungen oder Verriegelungen. Auch Schraubverschlüsse, Kjebverbindungen oder andere eigentlich unlösbar vorgesehene Verbindungen können so stets auf ihr korrektes Weiterbestehen hin untersucht werden, indem jeweils die beiden miteinander "unlösbar" verbundenen Elemente an dieser Schnittstelle bzw. Verbindungsstelle mit entsprechenden Transpondern ausgerüstet werden.

Mit der Erfindung wird es auch möglich, nicht nur kabelgebundene Anordnungen, sondern auch gekapselte Systeme zu erfassen.

### Bezugszeichenliste

- 1: Reader-Elektronik
- 2: Antenne
- 3a: Transponder
- 3b: Transponder
- 4a: Transponder
- 4b: Transponder
- 5a: Transponder
- 5b: Transponder
- 6a: Transponder
- 6b: Transponder
- 7: Stecker
- 8: Anschluss

## Patentansprüche

1. Anordnung zur Überwachung einer Vielzahl von Verbindungen,
- bei der Verbindungselemente (7, 8) vorgesehen sind, die zur Herstellung der Verbindungen paarweise miteinander verbindbar sind,
- bei der Transponder (3a, 3b, 4a, 4b. 5a, 5b, 6a, 6b) vorgesehen sind, die einigen der Verbindungselemente (7,8) zugeordnet sind,
- bei der Leseelemente vorgesehen sind, die einigen der Verbindungselemente (7, 8) zugeordnet sind,
**dadurch gekennzeichnet,**
**dass** jedem Verbindungselement (7, 8) einer jeden paarweisen Verbindung ein Transponder (3a, 3b, 4a, 4b, 5a, 5b, 6a, 6b) zugeordnet ist,
**dass** die Leseelemente jeweils zumindest einigen der Transponder (3a, 3b, 4a, 4b, 5a, 5b, 6a, 6b) der Verbindungselemente (7, 8) zugeordnet sind,
**dass** jedes Leseelement so ausgebildet und angeordnet ist, dass es den Transponder des jeweils anderen Verbindungselements (7, 8) einer paarweisen Verbindung auslesen kann, und
**dass** eine übergeordnete Leseeinrichtung (1, 2) vorgesehen ist, die eine Vielzahl der Transponder mit den zugeordneten Leseelementen nach derem jeweils gegenseitigen Auslesevorgang auslesen kann.

2. Anordnung nach Anspruch 1,
**dadurch gekennzeichnet,**
**dass** die Verbindungselemente Stecker (7) und Anschlüsse (8) sind und
**dass** bei einer paarweisen Verbindung ein Verbindungselement ein Stecker (7) und das andere Verbindungselement ein Anschluss (8) ist, in den der Stecker (7) steckbar ist.

3. Anordnung nach Anspruch 1 oder 2,
**dadurch gekennzeichnet,**
**dass** die übergeordnete Leseeinrichtung (1, 2) zugleich die Energieversorgung der Transponder und der Leseelemente übernimmt.

4. Anordnung nach Anspruch 3,
**dadurch gekennzeichnet,**
**dass** die übergeordnete Leseeinrichtung (1, 2) die Energieversorgung der Transponder (3a, 4a, 5a, 6a sowie 3b, 4b, 5b, 6b) mittels eines Hochfrequenzfeldes übernimmt

5. Anordnung nach einem der vorstehenden Ansprüche,
**dadurch gekennzeichnet,**
**dass** die Transponder in zwei Arten unterscheidbar sind,
**dass** eine erste Art von Transpondern als passive Transponder so ausgebildet sind, dass sie ununterbrochen ihre Kennung senden, sofern sie sich in Reichweite eines Leseelementes befinden,
**dass** eine zweite Art von Transpondem als aktive Transponder so ausgebildet sind, dass ihnen ein Leseelement zugeordnet ist und dass sie die Kennung eines passiven Transponders aufnehmen, wenn sich der passive Transponder und der aktive Transponder in einem definierten Abstand zueinander befinden.

6. Anordnung nach einem der vorstehenden Ansprüche,
**dadurch gekennzeichnet,**
**dass** die Leseelemente integraler Bestandteil des Transponders sind, dem sie zugeordnet sind.

7. Anordnung nach einem der vorstehenden Ansprüche,
**dadurch gekennzeichnet,**
**dass** die Kommunikation der Transponder untereinander durch die Nutzung unterschiedlicher Frequenzen erfolgt.

8. Anordnung nach Anspruch 7,
**dadurch gekennzeichnet,**
**dass** von den unterschiedlichen Frequenzen für die Kommunikation eine Frequenz für die Datenübertragung zwischen den Transpondem und eine andere Frequenz für die Kommunikation von den Transpondem zur übergeordneten Leseeinrichtung (1,2) genutzt wird.

9. Anordnung nach einem der vorstehenden Ansprüche,
**dadurch gekennzeichnet,**
**dass** die Kommunikation der Transponder untereinander unter Verwendung eines Zeit-Multiplex-Verfahrens erfolgt.

10. Anordnung nach einem der vorstehenden Ansprüche,
**dadurch gekennzeichnet,**
**dass** der definierte Abstand, der für das Lesen oder Erfassen von Transpondem einer paarweisen Verbindung vorgesehen ist, in einer Größenordnung von wenigen Millimetern liegt.

11. Anordnung nach einem der vorstehenden Ansprüche,
**dadurch gekennzeichnet,**
**dass** alle Transponder (3a, 4a, 5a, 6a sowie 3b, 4b, 5b, 6b) mit Leseelemente ausgestattet sind.

## Claims

1. An arrangement for monitoring a large number of connections,
- wherein there are provided connecting elements (7, 8) which are connectable to one another in pairs for the production of the connections,
- wherein there are provided transponders (3a, 3b, 4a, 4b, 5a, 5b, 6a, 6b) which are assigned to some of the connecting elements (7, 8),
- wherein there are provided read elements which are assigned to some of the connecting elements (7, 8),
**characterized,**
**in that** a transponder (3a, 3b, 4a, 4b, 5a, 5b, 6a, 6b) is assigned to each connecting element (7, 8) of each paired connection,
**in that** the read elements are respectively assigned to at least some of the transponders (3a, 3b, 4a, 4b, 5a, 5b, 6a, 6b) of the connecting elements (7, 8),
**in that** each read element is configured and arranged in such a manner that it can read out the transponder of the other respective connecting element (7, 8) of a paired connection, and
**in that** there is provided a higher-order read device (1, 2) which can read out a large number of the transponders having the assigned read elements after their respective mutual read out process.

2. An arrangement in accordance with Claim 1, **characterized**
**in that** the connecting elements are plugs (7) and sockets (8)
**in that**, in a paired connection, one connecting element is a plug (7) and the other connecting element is a socket (8) into which the plug (7) is adapted to be plugged.

3. An arrangement in accordance with Claim 1 or 2, **characterized**
**in that** the higher-order read device (1, 2) simultaneously acts as a power supply for the transponders and the read elements.

4. An arrangement in accordance with Claim 3, **characterized**
**in that** the higher-order read device (1, 2) acts as the power supply for the transponders (3a, 4a, 5a, 6a and also 3b, 4b, 5b, 6b) by means of a high-frequency field.

5. An arrangement in accordance with any of the preceding Claims, **characterized**
**in that** the transponders are distinguishable into two types,
**in that** a first type of transponders are so configured as passive transponders that they continuously send their identification insofar as they are within range of a read element,
**in that** a second type of transponders are so configured as active transponders that a read element is assigned to them and that they receive the identification of a passive transponder if the passive transponder and the active transponder are located within a defined distance from each other.

6. An arrangement in accordance with any of the preceding Claims, **characterized**
**in that** the read elements are an integral component of the transponder to which they are assigned.

7. An arrangement in accordance with any of the preceding Claims, **characterized**
**in that** communication of the transponders between themselves is effected by the use of different frequencies.

8. An arrangement in accordance with Claim 7, **characterized**
**in that**, of the different frequencies used for communication, one frequency is utilised for the transmission of data between the transponders and another frequency is utilised for communication from the transponders to the higher-order read device (1, 2).

9. An arrangement in accordance with any of the preceding Claims, **characterized**
**in that** communication of the transponders between themselves is effected using a time division multiplex process.

10. An arrangement in accordance with any of the preceding Claims, **characterized**
**in that** the defined distance, which is provided for reading or detecting the transponders of a paired connection, lies in the order of magnitude of a few millimetres.

11. An arrangement in accordance with any of the preceding Claims, **characterized**
**in that** all the transponders, (3a, 4a, 5a, 6a and also 3b, 4b, 5b, 6b) are equipped with read elements.

## Revendications

1. Arrangement pour surveiller une pluralité de connexions,
- dans lequel sont prévus des éléments de connexion (7, 8) qui sont interconnectables par paire pour réaliser des connexions ,
- dans lequel sont prévus des transpondeurs (3a, 3b, 4a, 4b, 5a, 5b, 6a, 6b) qui sont associés à certains des éléments de connexion (7, 8),
- dans lequel sont prévus des éléments de lecture qui sont associés à certains des éléments de connexion (7, 8),
**caractérisé**
**en ce qu'**un transpondeur (3a, 3b, 4a, 4b, 5a, 5b, 6a, 6b) est associé à chaque élément de connexion (7, 8) de chaque connexion par paire,
**en ce que** les éléments de lecture sont associés à chaque fois à au moins certains des transpondeurs (3a, 3b, 4a, 4b, 5a, 5b, 6a, 6b) des éléments de connexion (7, 8),
**en ce que** chaque élément de lecture est formé et agencé de manière telle qu'il puisse lire le transpondeur de chaque autre élément de connexion (7, 8) d'une connexion par paire, et
**en ce qu'**il est prévu un dispositif de lecture supérieur (1, 2) qui peut lire une pluralité des transpondeurs avec les éléments de lecture associés après leur opération de lecture à chaque fois mutuelle.

2. Arrangement selon la revendication 1, **caractérisé en ce que**
les éléments de connexion sont des prises (7) et des fiches (8) et
**en ce que**, lors d'une connexion par paire, un élément de connexion est une fiche (7) et l'autre élément de connexion est une prise (8) dans laquelle la fiche (7) peut être enfichée.

3. Arrangement selon la revendication 1 ou 2, **caractérisé en ce que** le dispositif de lecture supérieur (1, 2) prend en charge l'alimentation en énergie à la fois des transpondeurs et des éléments de lecture.

4. Arrangement selon la revendication 3, **caractérisé en ce que** le dispositif de lecture supérieur (1, 2) prend en charge l'alimentation en énergie des transpondeurs (3a, 4a, 5a, 6a ainsi que 3b, 4b, 5b, 6b) au moyen d'un champ à hautes fréquences.

5. Arrangement selon une des revendications précédentes, **caractérisé**
**en ce que** les transpondeurs peuvent être différenciés en deux types,
**en ce que** des transpondeurs d'un premier type sont formés en tant que transpondeurs passifs de sorte qu'ils émettent sans interruption leur indicatif dans la mesure où ils se trouvent à portée d'un élément de lecture,
**en ce que** des transpondeurs d'un deuxième type sont formés en tant que transpondeurs actifs de sorte qu'un élément de lecture leur soit associé et qu'ils captent l'indicatif d'un transpondeur passif lorsque le transpondeur passif et le transpondeur actif se trouvent à une distance définie l'un de l'autre.

6. Arrangement selon une des revendications précédentes, **caractérisé en ce que** les éléments de lecture sont des composants intégraux du transpondeur auquel ils sont associés.

7. Arrangement selon une des revendications précédentes, **caractérisé en ce que** la communication des transpondeurs entre eux se fait en utilisant différentes fréquences.

8. Arrangement selon la revendication 7, **caractérisé en ce que**,
parmi les différentes fréquences pour la communication, une fréquence est utilisée pour la transmission de données entre les transpondeurs et une autre fréquence pour la communication des transpondeurs avec le dispositif de lecture supérieur (1, 2).

9. Arrangement selon une des revendications précédentes, **caractérisé en ce que** la communication des transpondeurs entre eux se fait en employant un procédé à multiplexage temporel.

10. Arrangement selon une des revendications précédentes, **caractérisé en ce que** la distance définie, qui est prévue pour la lecture ou la détection des transpondeurs d'une connexion par paire, est d'un ordre de grandeur de quelques millimètres.

11. Arrangement selon une des revendications précédentes, **caractérisé en ce que** tous les transpondeurs (3a, 4a, 5a, 6a ainsi que 3b, 4b, 5b, 6b) sont équipés d'éléments de lecture.
